# EUROPÄISCHE PATENTANMELDUNG

(11) **EP 1 298 406 A2**
(43) Veröffentlichungstag der Anmeldung: **02.04.2003**
(21) Anmeldenummer: 02017119.5
(22) Anmeldetag: 30.07.2002
(51) Int. Cl.: F28F 13/00, F28F 21/00

(54) **Wärmeableitmittel zum Ableiten von Wärme einer Wärmequelle**

(30) Priorität: 03.08.2001 DE 10137652
(71) Anmelder: Urban Wolfgang Christian, 86199 Augsburg (DE)
(72) Erfinder: Urban Wolfgang Christian, 86199 Augsburg (DE)
(74) Vertreter: Rapp, Bertram, Dr.

(57) **Zusammenfassung**

Die Erfindung betrifft ein Wärmeableitmittel, das bereichsweise deckenförmig ausgebildet ist zum Ableiten von Wärme einer Wärmequelle (8), dessen Deckendicke im wesentlichen durch die Aufeinanderfolge von Lagen (2, 3, 4, 5, 6) bestimmt wird, die unterschiedlich wärmeleitende Materialien aufweisen.

## Beschreibung

Die Erfindung betrifft ein Wärmeableitmittel zum Ableiten von Wärme einer Wärmequelle, das bereichsweise deckenförmig ausgebildet ist.

Gemäß dem Stand der Technik werden wärmeentwickelnde Bauteile, wie z. B. Brennkraftmaschinen, Antriebsaggregate oder Turbinen, mit Hilfe einer Luftkühlung oder einer Wasserkühlung gekühlt. Dabei wird das wärmeentwickelnde Aggregat mit Luft bzw. mit Wasser umströmt. Aufgrund der immer kompakter werdenden Bauform der Aggregate kann eine hinreichende Kühlung durch Luftumströmung nicht mehr erreicht werden. Hinsichtlich der Wasserkühlung ist nachteilig, daß dafür Wasserzufuhr- und Abführrohre notwendig sind und die Zufuhr- und Abführrohre zusammen mit dem Wasser selber ein erhebliches Gewicht haben. In vielen Anwendungsbereichen erweist sich die Luftkühlung und/oder Wasserkühlung als nachteilig. Insbesondere im Rennsportbereich, ist die schwere Wasserkühlung von Nachteil. Aber auch die Luftkühlung ist in ihrer Verwendung problematisch, da sie Lufteinlässe in der Außenhaut etwa des Rennfahrzeuges erforderlich macht und damit den Cw-Wert erhöht.

Aufgabe der vorliegenden Erfindung ist, eine andere Art der Wärmeableitung von Wärmequellen insbesondere Antriebsaggregaten zur Verfügung zu stellen.

Diese Aufgabe wird durch ein erfindungsgemäßes Wärmeableitmittel zum Ableiten von Wärme einer Wärmequelle gelöst, das bereichsweise deckenförmig ausgebildet ist und dessen Deckendichte im wesentlichen durch die Aufeinanderfolge von Lagen bestimmt wird, die unterschiedlich wärmeleitende Materialien aufweisen.

Das Wärmeableitmittel ist der äußeren Form der Wärmequelle vorzugsweise angepaßt. Ein deckenförmiger Bereich ist einer äußeren Gestalt der Wärmequelle bereichsweise angepaßt. Von der Wärmequelle abgegebene Wärme ist vom Wärmeableitmittel günstigenfalls auf einer wärmequellenseitigen Oberfläche aufnehmbar durch das Wärmeableitmittel hindurchführbar und von einer wärmequellenabseitigen Oberfläche des Wärmeableitmittels in die Umgebung abgebbar.

Die Summe der einzelnen deckenförmigen Bereiche kann die Wärmequelle mantelförmig oder haubenförmig oder mattenförmig umgeben. Das Wärmeableitmittel braucht die Gewebestruktur einer Decke jedoch nicht aufzuweisen. Grundsätzlich kann die Wärmequelle auch nur teilweise von dem Wärmeableitmittel umgeben sein.

Das Wärmeableitmittel ermöglicht darüber hinaus eine gleichmäßigere Temperaturverteilung über wenigstens Teile der Wärmequelle. Wärme aus Bereichen hoher Temperatur ist durch das Wärmeableitmittel in Bereiche geringerer Temperatur transportierbar. Die Lebensdauer der Wärmequelle kann somit erhöht werden.

Das Wärmeableitmittel weist vorzugsweise wenigstens eine Kemlage und/oder eine wärmequellenseitige Deckenlage und/oder eine wärmequellenabseitige Deckenlage auf. Die wärmequellenabseitige Deckenlage und die wärmequellenseitige Deckenlage weisen günstigenfalls Baumwolle auf. Die beiden Deckenlagen können als Baumwollflies ausgebildet sein.

In einer weiteren Ausführungsform der Erfindung weist die wenigstens eine Kernlage eine Lage mit Kupfer auf. Die Lage mit Kupfer kann insbesondere als Kupfermatte ausgestaltet sein. Es ist auch denkbar die Lage mit Kupfer als Kupfergeflecht auszugestalten.

Grundsätzlich sind verschiedene wärmeleitende Materialien für die wenigstens eine Kemlage denkbar. Die verschiedenen wärmeleitenden Materialien können die aufeinanderfolgenden Lagen der wenigstens einen Kernlage in unterschiedlicher Reihenfolge ausbilden. Auch sind grundsätzlich Wiederholungen der Materiallagen der wenigstens einen Kernlage denkbar.

Die wenigstens eine Kernlage kann auch die Lage geschwärzter Aluminiumfolie aufweisen. Die geschwärzte Aluminiumfolie kann einteilig ausgebildet sein. Weiterhin ist es denkbar, daß die wenigstens eine Kemlage eine Lage einer Mischung aus geflocktem Graphit und aus geflocktem Kupfer aufweist. Die wenigstens eine Kemlage kann auch eine Lage nur geflockten Graphits und/oder eine Lage reiner Basaltwolle aufweisen. Weiterhin ist es denkbar, daß die wenigstens eine Kernlage eine Lage einer Basalt-Steinwollemischung aufweist.

Die Materialreihenfolge der aufeinanderfolgenden Lagen der wenigstens eine Deckenlage ist in allen Kombinationen auch unter Wiederholung einer Materiallage insbesondere der obengenannten Materialien denkbar.

In einer weiteren günstigen Ausführungsform des erfindungsgemäßen Wärmeableitmittels weist die wenigstens eine Kemlage wärmequellenwegwärts folgende aufeinanderfolgende Lagen auf: zunächst eine Lage geflockten Graphits, dann eine Lage einer Mischung aus Basalt und Steinwolle und dann eine Lage reiner Basaltwolle. Die drei genannten Kernlagen sind vorzugsweise wärmequellenseitig und wärmequellenabseitig von je einer Lage Baumwollflies umgeben.

Diese Ausführungsform des erfindungsgemäßen Wärmeableitmittels hat sich als besonders günstig zur Ableitung von Wärme einer Wärmequelle erwiesen. Diese Ausführungsform ist insbesondere für die Kühlung der Aggregate von Rennsportautos anwendbar.

Das erfindungsgemäße Wärmeableitmittel kann bekannte Luftkühlungen und Wasserkühlungen weitestgehend oder sogar ganz überflüssig machen.

Zur Minderung des Gesamtgewichts des Wärmeableitmittels und damit insbesondere des Rennsportwagens insgesamt wird das Wärmeableitmittel vorzugsweise durch wärmeleitende Materialien mit geringer Dichte ausgebildet.

Das Wärmeableitmittel kann elastisch verformbar sein, um sich den äußeren Konturen der Wärmequellen anzupassen. Wärmequellen mit besonders unregelmäßigen Oberflächen, Vorsprüngen und Senken sollten dabei vorzugsweise von einem besonders elastisch verformbaren Wärmeableitmittel umgeben sein. Die Elastizität des Wärmeableitmittels ist durch die Beschaffenheit der aufeinanderfolgenden Lagen mitbestimmt. Sie ist besonders groß, wenn die Materialien geflockt sind. Grundsätzlich sind geflocktes Graphit und geflocktes Kupfer als Material zur Ausbildung der wenigstens einen Kernlage biegsamer als die ganzstückigen entsprechenden Materialien.

In einer besonders bevorzugten Ausführungsform der Erfindung ist zwischen wenigstens zwei aufeinanderfolgenden Lagen eine Lage geflocktes Preßharz angeordnet. Die Lage geflockten Preßharzes kann die Deckenlagen von der weningstens einen Kernlage als auch die Kerrnlagen untereinander trennen. Die Lage geflockten Preßharzes kann die Wärmeleitfähigkeit des Wärmeableitmittels erhöhen und die Stabilität verbessern.

Die Aufgabe wird auch durch die Anordnung mit einer Oberfläche aufweisenden Wärmequelle und einem die Wärmequelle umgebenden Wärmeableitmittel, wie es oben beschrieben wurde, gelöst.

In einer günstigen Ausführungsform der erfindungsgemäßen Anordnung ist das Wärmeableitmittel in einem im wesentlichen konstanten Abstand zur Oberfläche angeordnet. Das Wärmeableitmittel ist vorzugsweise bereichsweise deckenförmig ausgebildet und die wärmequellenzugewandte Seite des Wärmeableitmittels liegt nicht unmittelbar auf der Oberfläche der Wärmequelle auf. Vorzugsweise ist zwischen einer wärmequellenseitigen Oberfläche des Wärmeableitmittels und der Oberfläche der Wärmequelle ein Abstand zwischen 5 und 7 mm vorhanden. Der Abstand hängt vom Typ der Wärmequelle ab und kann auch für eine bestimmte Wärmequelle gering variieren.

Vorzugsweise umgibt das Wärmeableitmittel die Wärmequelle wenigstens weitgehend. In dieser bevorzugten Ausführungsform der Erfindung wird insbesondere bei Aggregaten für Rennautos verhindert, daß diese einem insbesondere temperaturungeregelten Luftstrom ausgesetzt sind. Ein solcher Luftstrom kann durch plötzliche Temperaturänderung Spannungen im Aggregat verursachen.

In einer weiteren Ausführungsform weist das Wärmeableitmittel einen verstärkten Randbereich auf. Der verstärkte Randbereich kann mit der Wärmequelle verbunden sein. In dieser bevorzugten Ausführungsform der Erfindung kann auf Abstandshalter zwischen Wärmeableitmittel und Wärmequelle verzichtet werden. Die Abstandshalter führen zu Störungen und einer Verschlechterung der Wärmeleiteigenschaften des Wärmeableitmittels. Es sind zwar grundsätzlich Ausführungsformen denkbar, bei denen das Wärmeableitmittel direkt auf der Oberfläche der Wärmequelle aufliegt, jedoch ist grundsätzlich davon auszugehen, daß es in diesem Fall zu einer Rückverkapselung kommen kann. Der durch die Rückverkapselung verursachte Wärmestau kann die Wärmequelle schädigen.

Die aufeinanderfolgenden Lagen des Wärmeableitmittels weisen günstigenfalls eine Faserung auf. Diese Fasern sollten in einem Winkel von 60° bis 90° zur Wärmeableitmittelfläche angeordnet sein.

Das Wärmeableitmittel ist in der Anordnung vorzugsweise als selbsttragende Haube oder als selbsttragende Matte ausgebildet. Das Wärmeableitmittel ist dabei steif genug ausgebildet, um nur am Randbereich befestigt, den im wesentlichen konstanten Abstand zur Oberfläche der Wärmequelle beizubehalten.

Die Wärmequelle kann eine Brennkraftmaschine sein. Es ist aber auch möglich, daß die Wärmequelle ein Aggregat, eine Turbine, ein Mahlwerk und ähnliches ist. Grundsätzlich sind als Wärmequelle alle wärmeproduzierenden Vorrichtungen denkbar.

Die Aufgabe wird auch durch Verwendung des Wärmeableitmittels gemäß obiger Beschreibung zum Ableiten der Wärme der Wärmequelle gelöst. Günstigenfalls wird eine Brennkraftmaschine als Wärmequelle verwendet. Allerdings ist die Verwendung des Wärmeableitmittels keinesfalls auf die Wärmeableitung von Brennkraftmaschinen beschränkt.

Die Erfindung wird anhand eines Ausführungsbeispiels und Figuren beispielhaft erläutert. Es zeigt:
- **Figur 1:**: Querschnitt eines erfindungsgemäßen Wärmeableitmittels;
- **Figur 2:**: Querschnitt einer erfindungsgemäßen Anordnung.

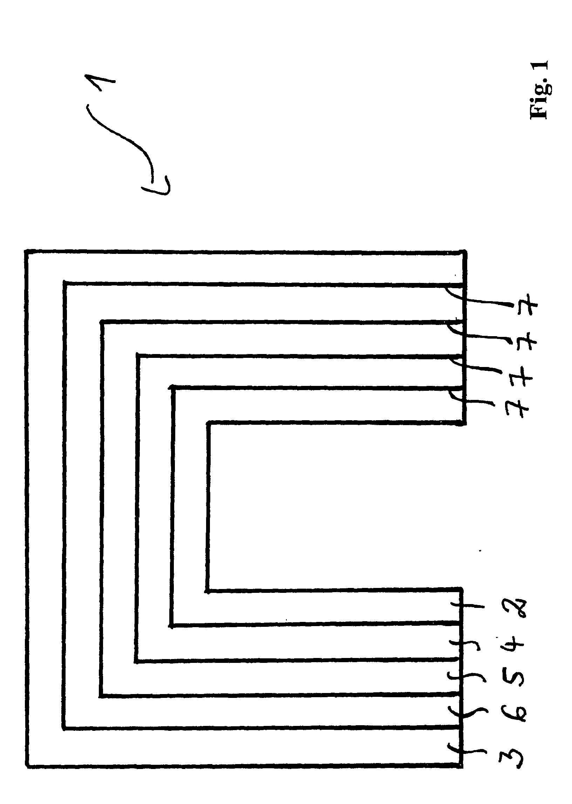

Das Wärmeableitmittel 1 gemäß Figur 1 ist als Haube ausgeformt. Die Haubeninnenseite wird von einer wärmequellenseitigen Deckenlage 2 gebildet. Die Haubenaußenseite wird von einer wärmequellenabseitigen Deckenlage 3 gebildet. Die wärmequellenseitige Deckenlage 2 besteht aus reinem Baumwollflies einer feinen Baumwolle. Die wärmequellenabseitige Deckenlage 3 besteht aus grobem Baumwollflies, auf das reine Baumwolle aufgeflockt ist. Zwischen der wärmequellenseitigen Deckenlage 2 und der wärmequellenabseitigen Deckenlage 3 ist wenigstens eine Kemlage 4, 5, 6 angeordnet. Die wenigstens eine Kemlage 4, 5, 6 weist drei breitere Kemlagen auf. Die drei breiten Kernlagen bestehen wärmequellenwegwärts aus einer Kernlage geflocktem Graphit 4, einer Kernlage aus einer Mischung aus Basalt-Steinwolle 5 und einer Kernlage aus reiner Basaltwolle 6. Zwischen der wärmequellenseitigen Deckenlage 2 und der Kernlage aus geflocktem Graphit 4 befindet sich eine dünne Matte aus geflocktem Preßharz 7. Zwischen der Kernlage aus geflocktem Graphit 4 und der Kernlage aus einer Mischung aus Basalt-Steinwolle 5 als auch der Kernlage aus einer Mischung aus Basalt-Steinwolle 5 und der Kemlage aus reiner Basaltwolle 6 befindet sich ebenfalls je eine Matte aus geflocktem Preßharz 7. Zwischen der Lage aus reiner Basaltwolle 6 und der wärmequellenabseitigen Deckenlage 3 ist ebenfalls eine Matte aus geflocktem Preßharz 7 angeordnet.

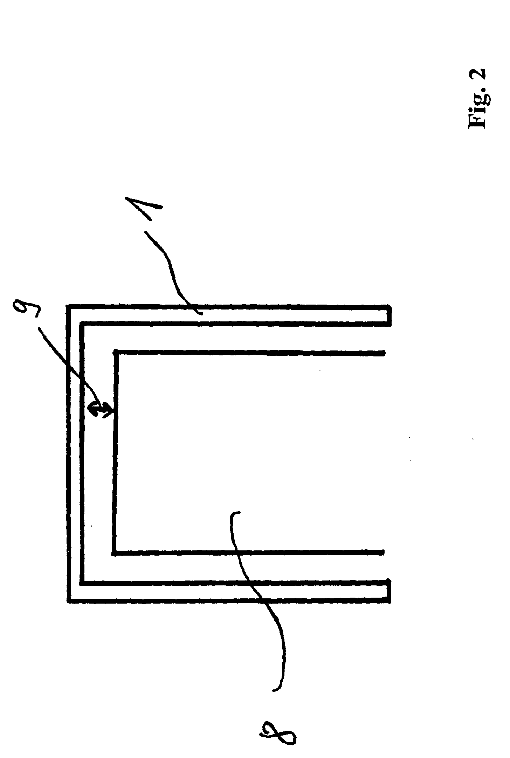

In Figur 2 ist eine Wärmeableithaube 1 gemäß Figur 1 dargestellt, die eine Wärmequelle 8 umgibt. Die Wärmequelle 8 ist ein Antriebsaggregat eines Rennautos. Die wärmequellenseitige Deckenlage 2 weist einen konstanten Abstand 9 von 5 mm zu einer Oberfläche des Antriebsaggregates auf. Zwischen der Oberfläche des Antriebsaggregates und der Wärmeableithaube 1 ist ein Luftspalt vorhanden, dessen Höhe dem im wesentlichen konstanten Abstand 9 von 5 mm entspricht.

## Patentansprüche

1. Wärmeableitmittel, das bereichsweise deckenförmig ausgebildet ist zum Ableiten von Wärme einer Wärmequelle (8), dessen Deckendicke im wesentlichen durch die Aufeinanderfolge von Lagen (2, 3, 4, 5, 6) bestimmt wird, die unterschiedlich wärmeleitende Materialien aufweisen.

2. Wärmeableitmittel nach Anspruch 1, **gekennzeichnet durch** wenigstens eine Kernlage (4, 5, 6) und/oder eine wärmequellenseitige Deckenlage (2) und/oder eine wärmequellenabseitige Deckenlage (3).

3. Wärmeableitmittel nach Anspruch 1 oder 2, **dadurch gekennzeichnet, daß** die wärmequellenabseitige Deckenlage (3) und/oder die wärmequellenseitige Deckenlage (2) Baumwollflies aufweisen.

4. Wärmeableitmittel nach den Ansprüchen 2 bis 3, **dadurch gekennzeichnet, daß** die wenigstens eine Kernlage (4, 5, 6) eine Lage mit Kupfer, insbesondere eine Kupfermatte und/oder ein Kupfergeflecht aufweist.

5. Wärmeableitmittel nach den Ansprüchen 2 bis 4, **dadurch gekennzeichnet, daß** die wenigstens eine Kernlage (4, 5, 6) eine Lage geschwärzte Aluminiumfolie aufweist.

6. Wärmeableitmittel nach den Ansprüchen 2 bis 5, **dadurch gekennzeichnet, daß** die wenigstens eine Kernlage (4, 5, 6) eine Lage einer Mischung aus geflocktem Graphit und aus geflocktem Kupfer aufweist.

7. Wärmeableitmittel nach den Ansprüchen 2 bis 6, **dadurch gekennzeichnet, daß** die wenigstens eine Kernlage (4, 5, 6) eine Lage geflocktes Graphit (4) aufweist.

8. Wärmeableitmittel nach den Ansprüchen 2 bis 7, **dadurch gekennzeichnet, daß** die wenigstens eine Kernlage (4, 5, 6) eine Lage reiner Basaltwolle (6) aufweist.

9. Wärmeableitmittel nach den Ansprüchen 2 bis 8, **dadurch gekennzeichnet, daß** die wenigstens eine Kernlage eine Lage einer Basalt-Steinwolle-Mischung (5) aufweist.

10. Wärmeableitmittel nach den Ansprüchen 2 oder 3, **dadurch gekennzeichnet, daß** die wenigstens eine Kernlage (4, 5, 6) wärmequellenwegwärts folgende aufeinanderfolgenden Lagen aufweist: eine Lage geflocktes Graphit (4), eine Lage einer Mischung aus Basalt und Steinwolle (5) und eine Lage reiner Basaltwolle (6).

11. Wärmeableitmittel nach den Ansprüchen 1 bis 10, **dadurch gekennzeichnet, daß** wenigstens zwischen zwei aufeinanderfolgenden Lagen eine Lage geflocktes Preßharz (7) angeordnet ist.

12. Anordnung mit einer eine Oberfläche aufweisenden Wärmequelle (8) und einem die Wärmequelle umgebenden Wärmeableitmittel (1) nach den Ansprüchen 1 bis 11.

13. Anordnung nach Anspruch 12, **dadurch gekennzeichnet, daß** das Wärmeableitmittel (1) in einem im wesentlichen konstanten Abstand (9) zur Oberfläche angeordnet ist.

14. Anordnung nach Anspruch 13, **dadurch gekennzeichnet, daß** der im wesentlichen konstante Abstand (9) zwischen 5 und 7 mm liegt.

15. Anordnung nach den Ansprüchen 11 bis 14, **dadurch gekennzeichnet, daß** das Wärmeableitmittel (1) einen festen Randbereich aufweist, der mit der Wärmequelle (8) verbunden ist.

16. Anordnung nach den Ansprüchen 11 bis 15, **dadurch gekennzeichnet, daß** das Wärmeableitmittel (1) die Wärmequelle (8) wenigstens weitgehend umgibt.

17. Anordnung nach den Ansprüchen 11 bis 15, **dadurch gekennzeichnet, daß** die Wärmequelle (1) eine Brennkraftmaschine ist.

18. Verwendung eines Wärmeableitmittels nach den Ansprüchen 1 bis 11 zum Ableiten der Wärme der Wärmequelle (8).

19. Verwendung eines Wärmeableitmittels nach Anspruch 17, **dadurch gekennzeichnet, daß** eine Brennkraftmaschine als Wärmequelle (8) verwendet wird.
